# EUROPÄISCHE PATENTANMELDUNG

(11) **EP 2 017 230 A1**
(43) Veröffentlichungstag der Anmeldung: **21.01.2009**
(21) Anmeldenummer: 08013123.8
(22) Anmeldetag: 21.07.2008
(51) Int. Cl.: C02F 1/465

(54) **Vorrichtung und Verfahren zur Behandlung von menschlichen Fäkalien und Sanitärlösungen**

(30) Priorität: 19.07.2007 DE 102007033994
(71) Anmelder: Jüssen, Armin, 52152 Simmerath (DE); Jüssen, Marc, 52062 Aachen (DE)
(72) Erfinder: Jüssen, Armin, D-52152 Simmerath (DE); Jüssen, Mark, D-52062 Aachen, (DE)
(74) Vertreter: Wolff, Felix

(57) **Zusammenfassung**

Die vorliegende Erfindung betrifft eine Vorrichtung zur Behandlung von menschlichen Fäkalien und Sanitärlösungen mit einer Elektroflotation (5).

## Beschreibung

Die vorliegende Erfindung betrifft eine Vorrichtung zur Behandlung von menschlichen Fäkalien und Sanitärlösungen.

Auf Baustellen und bei Festivitäten werden heutzutage immer öfter Toilettenhäuser aufgestellt. Diese Toilettenhäuser sind mit ca. 60 I Sanitärlösung gefüllt, die auf Abwasser und beispielsweise vorzugsweise natürlichen ätherischen Ölen basieren, die beispielsweise in einer Kapsel in dem Wasser vorgehalten wird oder das mit dem Abwasser gemischt ist. Die Toilettenhäuschen werden bei Bedarf entleert, desinfiziert und mit neuer Sanitärlösung gefüllt. Der Fäkalschlamm, der aus menschlichen Fäkalien und der Sanitärlösung besteht, wird in einen Tank an Bord eines Service LKWs gepumpt und muss danach entsorgt werden.

Da die oben beschriebenen menschlichen Fäkalien und die Sanitärlösungen nicht problemlos in einer öffentlichen Kläranlage entsorgt werden können, war die Aufgabe der vorliegenden Erfindung eine Vorrichtung zur Behandlung von menschlichen Fäkalien und der Sanitärlösung zur Verfügung zu stellen.

Gelöst wird die Aufgabe mit einer Vorrichtung zur Behandlung von menschlichen Fäkalien und der Sanitärlösung mit einer Elektroflotation.

Es war überaus erstaunlich und für den Fachmann nicht zu erwarten, dass es mit der erfindungsgemäßen Vorrichtung gelingt, ein Abwasser zu erzeugen, dass ohne zusätzliche Genehmigung in die Kanalisation abgelassen oder einer weiteren Verwendung zugeführt werden kann. Die erfindungsgemäße Vorrichtung ist einfach aufgebaut und zu betreiben. Der Feststoff der Fäkalien fällt separat an und kann als Wertstoff einer thermischen Verwertung zugeführt werden. Die Schadstofffracht des Fäkalienschlamms ist deutlich reduziert. Die erfindungsgemäße Vorrichtung hat einen geringen Platzbedarf und hat einen sehr flexiblen Kapazitätsbereich.

Erfindungsgemäß weist die Vorrichtung eine Elektroflotation auf.

Die Elektroflotation ist ein Alternativverfahren zu bisher verwendeten konventionellen Fällungs- und Behandlungsverfahren in der Abwasser- und Abfallaufbereitung und wird mit Strom betrieben. Es basiert auf einer Kombination aus elektrolytischen -, chemischen -, und physikalischen Vorgängen, bei dem Flachmaterial aus Eisen oder Aluminium als Anode / Kathode eingesetzt wird.

Mittels Elektroflotation wird der Feststoff der Fäkalien entwässert, so dass ein relativ trockener und fester Reststoff verbleibt, der als Brennstoff einsetzbar ist. Zudem werden Schwermetalle und andere CSB / BSB relevanten Stoffe zumindest teilweise oxydiert. Diese Vorgehensweise sorgt für eine kostengünstige Reduzierung der Abfallmenge und Verringerung der Schadstofffrachten.

Als Verbrauchsmaterialien werden ausschließlich Stahl- bzw. Aluminiumplatten benötigt, deren Verbrauch sich ebenso wie der Energieverbrauch nach der Konsistenz der vorliegenden Fäkalien und Anschlusspolarität des Metalls richtet Im Mittelwert kann jedoch davon ausgegangen werden, dass vorzugsweise pro m³ Fäkalienschlamm ca. 10-20 g Aluminium und 7-15 g Eisen abgebaut werden. Der Energiebedarf liegt vorzugsweise bei 4-40 kW pro m³.

Im Reaktor werden Eisen- und Aluminium- Anoden eingesetzt, die bei Stromzufuhr durch Oxydbildung die Belastungsstoffe ausflocken. Das Elektrodenmaterial der zwei Metallplatten ist jedoch nur für die Anodenseite (+ Pol) von Bedeutung. Die Kathodenseite (- Pol) kann aus einen beliebigen leitenden Material gefertigt sein, sogar eine Edelstahlkathode ist möglich. Zur Elektrolyse wird ein Gleichstrom angelegt, dessen Stromstärke abhängig von der elektrischen Leitfähigkeit der Lösung, dem Abstand der Elektroden und der Belastung der Lösung mit Schadstoffen ist.

Vorzugsweise wird bei der Elektroflotation gezielt mit einer Metallauflösung gearbeitet. Die Aluminium- bzw. Eisenanoden dienen als Opferanoden, d. h., sie sind Ver brauchsmaterialien, die durch die Elektrolyse abgebaut werden. Aluminium und Eisen gelangen also als Kautionen in die Lösung. Für den vorliegenden Fall kann man folgende Gleichungen formulieren:

Fe(Gitter) → Fead Al(Gitter) → Alad

Fead + m H2O→ [Fe3+ (H2O)m] + 3 e- , Alad + m H2O → [Al3+ (H2O)m] + 3 e-

Durch die elektrolytische Wirkung zwischen Anode und Kathode im Reaktor entstehen durch H₂O- Trennung Feinst- Gasbläschen.

H₂O + ΔE → H₂ + ½ O₂

Der freiwerdende Sauerstoff ist sehr aggressiv und oxydiert die in den Abfällen befindlichen Belastungsstoffe, insbesondere die Schwermetalle, äußerst intensiv. Durch die oxidative Umgebung werden ebenfalls die umweltrelevanten CSB und BSB- Werte gesenkt zudem findet eine Nitrifikation statt.

| | |
|---|---|
| Blei: | Pb₂⁺ + ½ O₂ → PbO |
| Cadmium: | Cd₂⁺ + ½ O₂ → CdO |
| Chrom: | 2 Cr³+ 1½ O₂ → Cr₂O₃ |
| Kupfer: | CU₂⁺ + ½ O₂ → CuO |
| Nickel: | Ni²⁺ + ½ O₂ → NiO |
| Quecksilber: | Hg²⁺ + ½ O₂ → HgO |
| Zink: | Zn²⁺ + ½ O₂ → ZnO |

Der freigewordene Wasserstoff wirkt reduzierend und bewirkt eine Denitrifikation des Nitrats.

| | |
|---|---|
| Ammoniak NH₃: | |
| NH₃ Autoprotolyse in Wasser: | 2NH₃ → NH₄+ +NH²⁻ |
| Nitrifikation: | 1.) 2NH₄⁺ + O₂ → 2NO₂⁻ + 4H+ + 2H₂O Nitrit |
| | 2.) 2NO₂- + O₂ → 2NO₃⁻ Nitrat |

Eine Schlammflotation von Nitrit und Ammoniak bewirkt die Bildung von gasförmigen Stickstoff:

| | |
|---|---|
| Schlammflotation: | NO₂⁻ + NH₄⁺ → N₂↑+ 2 H₂O |
| Nitrat NO₃: | |
| Denitrifikation: | 2NO₃ + 5H₂ +2H+ → N₂↑+ 6 H₂O |

Neben diesen einfachen Redoxreaktionen bilden sich vorzugswesie Komplexverbindungen der unterschiedlichen Metalle.

Eisen protolysiert in wässriger Lösung über mehrere Zwischenschritte zu wasserhaltigem Eisenhydroxid [ Fe(OH) ] und zu Eisen (III )-oxid ( Fe2O3 ). Diese komplexen Kationen kondensieren schließlich zu viel größeren Komplexionen, die etwa die Zusammensetzung FeO(OH)n und Fe2O3 • n H2O haben. Die Komplexionen können Schmutzstoffe adsorptiv aufnehmen und sie dadurch in absetzbare Flocken umwandeln. Bei der Entladung der Eisen- lonen durch Hydrolyse verlieren die positiven Metallhydroxidteilchen ihre Wasserlöslichkeit. Die positiven Eisenhydroxide und Eisenoxide lagern sich durch Adsorption an Partikel und Kolloide an.

Vorzugsweise ist der Elektroflotation ein Vorratscontainer zur Sammlung der diskontinuierlich ankommenden Fäkalien und Sanitärlösungen, vorgeordnet. Dieser Container weist besonders bevorzugt ein Sieb auf, das Bestandteile der Fäkalien wie beispielsweise T-Shirts, Unterwäsche, Stofffetze sowie Metallteile und andere Kleinteile aus dem Fäkalien und Sanitärlösungsgemisch filtert. Der Filter kann dem Container auch vorgeschaltet sein.

Weiterhin bevorzugt werden die Fäkalien und die Sanitärlösung mit einer Zerkleinerungsvorrichtung behandelt. Diese Zerkleinerungsvorrichtung zerkleinert die Fäkalien und homogenisiert die Lösung und dispergiert die Feststoffe in der Lösung. Vorzugsweise erfolgt dieser Verfahrensschritt mit einem Mazerator, beispielsweise der Firma Allweiler Deutschland.

Weiterhin bevorzugt werden die Fäkalien bzw. die Sanitärlösung einer ersten Feststoff/ Flüssigkeitstrennung unterzogen. Vorzugsweise erfolgt diese Trennung mit einer Dekanterzentrifuge. Es können jedoch auch andere Separationssysteme eingesetzt werden. Bei Bedarf kann der Separation ein kationisches Polymer zugeführt werden.

Die aus dem Separationsschritt gewonnene Feststofffraktion wir vorzugsweise in einem Filtrationscontainer gesammelt und ganz besonders bevorzugt anschließend einer thermischen Verwertung, mit der Wärme und/oder Strom erzeugt werden kann, zugeführt.

Zur Verbesserung der Entwässerungseigenschaften des Fäkalschlamms wird dieser vorzugsweise konditioniert, d.h. durch Einwirkung chemischer und physikalischer Vorgänge werden die Bindungskräfte zwischen den Fest- und Flüssigkomponenten vermindert. Dies geschieht vorzugsweise durch ein kationisches Polymer. Dieses Polymer flockt die im Fäkalschlamm befindlichen kleinen Feststoffpartikel aus, so dass diese anschließend abgetrennt werden können. Die dünnflüssige Konzentration der Fäkalabfälle verlangt den Einsatz von Polyelektrolyt zur Flockungsbildung und Entwässerung. Der Polyelektrolytverbrauch ist vom eingesetzten Polyelektrolytprodukt und der Konzentration der Fäkalien abhängig.

Die Polymerlösung wird vorzugsweise aus flüssigem Polymerkonzentrat hergestellt. Es wird vorzugsweise eine 0,4%ige Lösung angesetzt, so dass 4 Liter Konzentrat für 1 Kubikmeter Polymerlösung ausreichen. Der Verbrauch der Lösung liegt vorzugsweise bei ca. 5-10 Liter/ Kubikmeter Fäkalschlamm.

Die flüssige Phase dieser Separation wird zu den Elektroflotationsreaktoren gepumpt, wo weitere Flockungsprozesse stattfinden. Die Flocken werden vorzugsweise durch ein Polymer stabilisiert, bevor sie in einer Separationsanlage, vorzugsweise einem Vakuumbandfilter, separiert werden. Dieses Vakuum- Filtersystem ist vorzugsweise für eine maximale Entwässerung bei hoher Durchsatzleistung ausgelegt. Das aus der Elektroflotation ablaufende Abwasser ist wiederum in den wesentlichen Parametern reduziert und wird vorzugsweise einer weiteren Aufbereitung zugeführt. Die Flocken gelangen vorzugsweise über eine Pumpe besonders bevorzugt ebenfalls in die Dekanterzentrifuge wo sie weiter getrocknet werden.

Das Abwasser aus der Elektroflotation wird vorzugsweise durch einen Filter, beispielsweise einen Papierbandfilter, abermals filtriert bevor es über eine vorzugsweise mengenregelbare Pumpe in die Übergabestelle des Abwassers fließt.

Sollten Störungen im Betrieb auftreten, so ist eine Rückleitung des Abwassers in den Vorratscontainer bevorzugt möglich. Auf diese Weise kann die komplette Anlage leergepumpt werden, ohne das Wasser in den Kanal abläuft.

Soll nicht nur die wässrige Phase, sondern das gesamte Eingangsmaterial den Elektroflotationsprozessen zugeführt werden, so kann die Dekanterzentrifuge auch nach der Elektroflotation eingesetzt werden.

Die durch die Elektroflotationsstufe gebildeten Mikroflocken werden vorzugsweise ebenfalls separiert. Aufgrund der geringen Feststoffmenge wird in diesem Verfahrensschritt kein Vakuumbandfilter benötigt. Zur Filtration ist beispielsweise ein Fließbandfilter ausreichend.

Durch diesen letzten Verfahrensschritt erreicht das Wasser vorzugsweise Einleitqualität.

Das Prozesswasser ist klar und darf eingeleitet oder verrieselt werden, die CSB-, BSB- und Nitratwerte liegen in Indirekteinleiterqualität. Die biologische und bakteriologische Untersuchung zeigt, dass sich die Kolibakterien im Fäkalwasser um 85% und die untersuchten Krankheitserreger bei der biologischen Untersuchung nahezu vollständig eliminieren lassen.

Des weiteren wird durch die Elektroflotation eine Vielzahl anderer Belastungsstoffe aus dem Abwasser entfernt, die aufgrund der Vielzahl der Parameter nicht näher untersucht werden konnten.

Der Feststoff des Papierbandfilters wird ebenso wie Feststoff der Zentrifuge vorzugsweise in einem abgedichteten Container gesammelt und vorzugsweise zur weiteren thermischen Verwertung gebracht.

Ein weiterer Gegenstand der vorliegenden Erfindung ist ein Verfahren zur Behandlung von menschlichen Fäkalien und Sanitärlösungen, die in einer Elektroflotation durchgeführt wird.

Die oben gemachten Offenbarungen bezüglich der Vorrichtung gelten für das erfindungsgemäße verfahren gleichermaßen.

Vorzugsweise werden die Fäkalien vor der Elektroflotation homogenisiert und dispergiert und anschließend abgetrennt.

Weiterhin bevorzugt wird der Feststoff der Filtrierung und/oder der Feststoff in der Elektroflotation entsteht gesammelt und verbrannt.

In einer weiteren bevorzugten Ausführungsform wird die aus der Elektroflotation ablaufende Flüssigkeit noch einmal gefiltert. Vorzugsweise erfolgt diese Filterung mit einem Papierfilter.

Die so behandelte Flüssigkeit wird vorzugsweise in ein Abwassersystem, beispielsweise einer kommunalen Kläranlage eingeleitet oder kann einer weiteren Verwertung, wie beispielsweise zur Bewässerung eingesetzt werden.

Erfindungsgemäß kann das erfindungsgemäße Verfahren und die erfindungsgemäße Vorrichtung statt mit menschlichen Fäkalien und Sanitärlösungen auch mit Gülle, die beispielsweise von Schweinen, Rindem, Hühnem, Schafen oder ähnlichen Tieren stammt, durchgeführt werden.

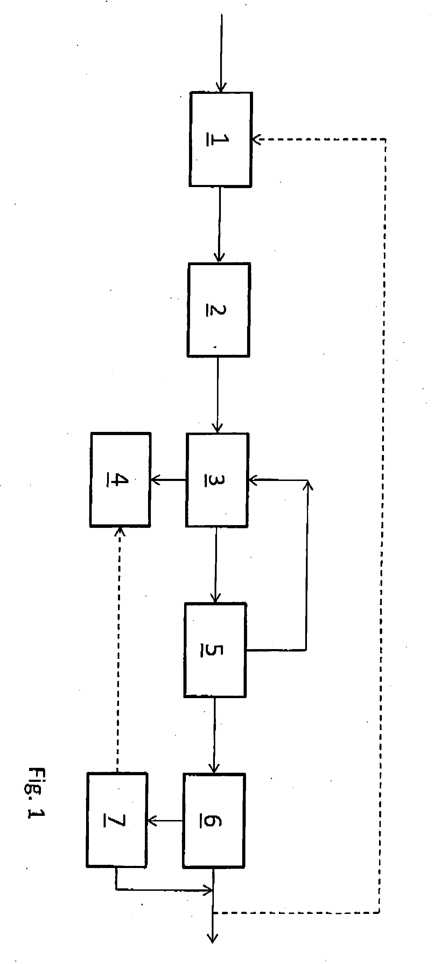

Im Folgenden wird die Erfindung anhand der einzigen Figur 1 erläutert. Die Erläuterungen gelten für die erfindungsgemäße Vorrichtung und das erfindungsgemäße Verfahren gleichermaßen.

Figur 1 zeigt ein Verfahrensschema der erfindungsgemäßen Verfahrens, bzw. der erfindungsgemäßen Vorrichtung. Zunächst werden die Fäkalien und die Sanitärlösung in einem Vorratscontainer 1 gesammelt. In oder vor dem Vorratscontainer befindet sich ein Sieb, dass Feststoffe, die nicht Bestandteil der Fäkalien bzw. der Sanitärlösung sein sollten, wie T-Shirts, Unterwäsche, Stofffetzen, Metallteile oder andere Teile aus der Lösung herausfiltert. Die Fäkalien und die Sanitärlösung, der Fäkalienschlamm werden sodann in einen Mazerator überführt, in dem die Feststoffe zerkleinert und die Lösung homogenisiert und die Feststoffe in der Lösung dispergiert werden. Der folgende Verfahrensschritt ist eine Feststoffabtrennung 3 in dem vorliegenden fall eine Dekanterzentrifuge, die den Feststoff weitgehend von der Flüssigkeit trennt. Diese Trennung kann durch ein kationisches Polymer unterstützt werden. Der so erhaltene Feststoff wird in einem Filtrationscontainer 4 gesammelt und anschließend beispielsweise einer Verbrennung zugeführt. Die Flüssigphase aus der Dekanterzentrifuge 3 gelangt in die Elektroflotation, wo weitere Flockungsprozesse und ein Schadstoffabbau stattfinden. Die dabei entstehenden Flocken werden vorzugsweise durch ein Polymer stabilisiert, bevor sie entwässert werden. Das in der Elektroflotation entstandene Prozeßabwasser ist in den wesentlichen Parametern reduziert und wird einer weiteren Aufarbeitung zugeführt. Die Flocken gelangen über eine Pumpe ebenfalls in die Dekanterzentrifuge, wo sie weiter getrocknet werden.

Sollte er nicht nur die wässrige Phase, sondern das gesamte Eingangsmaterial dem Elektroflotationsprozess zugeführt werden, so kann die Feststoffabtrennung 3 auch nach der Elektroflotation angeordnet werden. Für den Fall; dass eine Störung auftritt, kann die gesamte Flüssigkeit, die sich in Aggregaten 2, 3, 5 und 6 befindet aus dem Ablauf zurück in den Vorratscontainer gepumpt werden. Die Anlage kann demnach vollständig von Flüssigkeit entleert werden, ohne dass diese in die Kanalisation gegeben werden muss.

### Beispiel:

Bei diesem Beispiel werden folgende Verfahrensschritte eingesetzt:
1. Trennung der groben Feststoffe in den Abfällen aus Toilettenhäuschen Beseitigung von Unrat wie T-Shirts, Unterwäsche, Metallen etc.
2. Zerkleinerung des Materials
   Homogenisierung des Materials,
   Zerkleinerung um das Material pumpfähig herzustellen
3. Konditionierung des Fäkalienschlamms, Separation:
   Abscheidung des meisten Feststoffes, dieser ist verwertbar
   Reduzierung des TS im Fäkalwasser
   Reduktion von N-NH4 und PO4, CSB- BSB im Fäkalschlamm
   nicht separierbare Stoffe werden geflockt und separiert
4. Behandlung des Prozesswassers mittels Elektroflotation:
   Oxidations- und Flockungsprozesse verringern CSB und N Belastung
   Behandeltes Fäkalabwasser erreicht die erforderlichen Einleitwerte.
5. Separation der Flocke:
   Abtrennung der restlichen Feststoffe, sammeln und Verwertung des Materials Das Prozesswasser ist klar und darf eingeleitet oder verrieselt werden Der Feststoff gelangt ebenfalls in den Container, das saubere Wasser wird in die Kanalisation abgelassen oder kann einer weiteren Verwendung zugeführt werden.

### Ergebnisse:

Der nachstehenden Tabelle können typische Werte hierfür entnommen werden:

| | Fäkalien aus Toilettenhäuschen | Feststoff | Klare Lösung | Grenzwerte gemäß §4 Abs. 11 & 12 AbfKlärV |
|---|---|---|---|---|
| CSB | 25.500 mg/l | 204 mg/g | 468 mg/l | |
| BSB5 | 4.020 mg/l | -.- | 89 mg/l | |
| Ammonium- N | 360 mg/l | 210 mg/kg | 87 mg/l | |
| Gesamt-P | 18,2 mg/g mT | 18,7 mg/g mT | 0,21 mg/l | |
| Blei Pb | 87 mg/kg mT | 90 mg/kg mT | < 0,05 mg/l | 900 mg/kg mT |
| Cadmium Cd | 2,7 mg/kg mT | 2,4 mg/kg mT | < 0,005 mg/l | 10 mg/kg mT |
| Chrom Cr | 21 mg/kg mT | 19 mg/kg mT | < 0,05 mg/l | 900 mg/kg mT |
| Kupfer Cu | 190 mg/kg mT | 170 mg/kg mT | 0,11 mg/l | 800 mg/kg mT |
| Nickel Ni | 22 mg/kg mT | 25 mg/kg mT | < 0,05 mg/l | 200 mg/kg mT |
| Quecksilber Hg | 0,87 mg/kg mT | 0,81 mg/kg mT | < 0,001 mg/l | 8 mg/kg mT |
| Zink | 760 mg/kg mT | 810 mg/kg mT | 0,27 mg/l | 250 mg/kg mT |

Das Prozesswasser wird durch einen weiteren Papierfilter abermals gefiltert, bevor es über eine mengenregelbare Pumpe in die Übergabestelle des Abwassers fließt.

### Bezugszeichenliste:

- 1: Vorratscontainer
- 2: Zerkleinerung des Feststoffs
- 3: Feststoffabtrennung
- 4: Filtrationscontainer, Verbrennung
- 5: Elektroflotation
- 6: Feststoffabtrennung
- 7: Feststoffabtrennung

## Patentansprüche

1. Vorrichtung zur Behandlung von menschlichen Fäkalien und Sanitärtösungen mit einer Elektroflotation (5).

2. Vorrichtung nach Anspruch 1, **dadurch gekennzeichnet, dass** vor der Elektroflotation ein Vorratscontainer (1) zur Sammlung der diskontinuierlich ankommenden Fäkalien und Sanitärlösungen angeordnet ist.

3. Vorrichtung nach einem der voranstehenden Ansprüche, **dadurch gekennzeichnet, dass** vor der Elektroflotation (5) eine Feststoffzerkleinerung (2) angeordnet ist.

4. Vorrichtung nach einem der voranstehenden Ansprüche, **dadurch gekennzeichnet, dass** nach der Feststoffzerkleinerung (2) eine Feststoffabtrennung (3) angeordnet ist.

5. Vorrichtung nach Anspruch 4, **dadurch gekennzeichnet, dass** sie einen Filtrationscontainer (4) aufweist, in dem der Feststoff gesammelt wird.

6. Vorrichtung nach einem der voranstehenden Ansprüche, **dadurch gekennzeichnet, dass** Feststoff aus der Elektroflotation der Feststoffabtrennung (3) zuführbar ist.

7. Vorrichtung nach einem der voranstehenden Ansprüche, **dadurch gekennzeichnet, dass** nach der Elektroflotation eine Feststoffabtrennung (7) angeordnet ist.

8. Vorrichtung nach einem der voranstehenden Ansprüche, **dadurch gekennzeichnet, dass** sie in den Vorratsbehälter (1) entleerbar ist.

9. Verfahren zur Behandlung von menschlichen Fäkalien und Sanitärlösung, **dadurch gekennzeichnet, dass** die Behandlung in einer Elektroflotation (5) durchgeführt wird.

10. Verfahren nach Anspruch 9, **dadurch gekennzeichnet, dass** die Fäkalien vor der Elektroflotationn (5) zerkleinert werden.

11. Verfahren nach einem der voranstehenden Ansprüche, **dadurch gekennzeichnet, dass** die Fäkalien vor der Elektroflotation (5) gefiltert werden.

12. Verfahren nach einem der voranstehenden Ansprüche, **dadurch gekennzeichnet, dass** der Feststoff der Filtrierung und/oder der in der Elektroflotation entstehende Feststoff gesammelt und verbrannt wird.

13. Verfahren nach einem der voranstehenden Ansprüche, **dadurch gekennzeichnet, dass** die aus der Elektroflotation ablaufende Flüssigkeit gefiltert wird.

14. Verfahren nach einem der voranstehenden Ansprüche, **dadurch gekennzeichnet**, das die Flüssigkeit aus der Elektroflotation in ein Abwassersystem eingeleitet wird.

15. Vorrichtung oder Verfahren nach einem der voranstehenden Ansprüche, **dadurch gekennzeichnet, dass** statt menschlichen Fäkalien und Sanitätslösungen Gülle eingesetzt wird.
